# EUROPEAN PATENT APPLICATION

(11) **EP 1 714 560 A1**
(43) Date of publication of application: **25.10.2006**
(21) Application number: 04808171.5
(22) Date of filing: 27.12.2004
(51) Int. Cl.: A23G 9/28

(54) **SOFTENING AND EXTRUDING SYSTEM FOR FROZEN CONFECTIONERY AND SOFTENING AND EXTRUDING METHOD FOR THE FROZEN CONFECTIONERY**

(30) Priority: 25.12.2003 JP 2003431254
(71) Applicant: Effort Corporation, Tokyo 104-0045 (JP); KOBAYASHI, Seiichi, Adachi-ku Tokyo 120-0005 (JP)
(72) Inventor: KOBAYASHI, Seiichi, Adachi-ku, Tokyo 120-0005 (JP); KOBAYASHI, Ryoji c/o EFFORT Corporation, Chuo-ku, Tokyo (JP)
(74) Representative: Staudt, Hans-Peter
(86) International application number: PCT/JP2004/019821
(87) International publication number: WO 2005/063041

(57) **Abstract**

Object To obtain a system and a method for softening a frozen confectionary without applying heat thereto, and then dispensing the same, which make it possible to dispense the frozen confectionary in an appropriately soft state, regardless of the kind of frozen confectionary.

Means for achieving the object The system of the present invention includes therein a bag-shaped container 100 having an outlet port, the bag-shaped container including therein the frozen solid confectionary; a frozen confectionary softening unit 14 for softening the frozen confectionary in the bag-shaped container by application of pressure in the absence of heat application thereto; a dispensing unit 16 for dispensing the frozen confectionary from the outlet port after the frozen confectionary being softened by the pressure application operation to the bag-shaped container 100; a bag-shaped container transporting means 18 for transporting the bag-shaped container 100 to a softening operation and a dispensing operation; a species recognition means 12 for recognizing the species of the frozen confectionary provided in the bag-shaped container 100; and a control unit 20 for controlling the frozen confectionary softening unit so as to function based on appropriate pre-stored conditions for the softening operation, depending on the recognized species of the frozen confectionary, in the absence of heat application.

## Description

### Technical Field

The present invention relates to a system of softening and dispensing a frozen confectionary, and more particularly to a system of softening and dispensing a frozen confectionary wherein a frozen confectionary is softened by applying a pressure in the absence of heat application, and then subjecting the frozen confectionary to a dispensing operation. The present invention further relates to a method for softening and dispensing the frozen confectionary.

### Background Art

A conventional soft ice cream dispenser is a large and expensive apparatus including, for instance, a freezer mechanism. Therefore, such dispenser is not suitable for placement in a small shop, in a vehicle, or in the open air. As a result, it is only possible for sales in such small shop or vehicle, or in the open air to provide a product only having a shape of as a soft ice cream, and the actual condition thereof being the same as a frozen ice cream.

So-called "soft ice cream" has an oxygen content which is greater than a product called "ice cream" which is sold in a frozen state. Consumers do not enjoy the taste or soft and pleasant feelings of soft ice creams until the soft ice cream is offered in a soft state. Accordingly, many proposals have been made as to a technology for making it possible to provide a small-sized apparatus for easily providing a soft ice cream.

Japanese Kokai Publication 7(1995)-327608 (Patent Publication 1) relates to equipment for dishing up a kneaded product. According to the above-mentioned publication, ice cream or the like stored in a container (57) is pressed by using a hammer (16) and dispensed from an outlet port. The ice cream is dispensed into a cone (50) which is supported so as to automatically rotate when the ice cream is dispensed. Accordingly, it is possible to easily dish up a kneaded product such as soft ice cream.

Moreover, Japanese Kokai Publication 2000-232852 (Patent Publication 2) discloses a technology relating to "Apparatus for providing frozen confectionary and method therefore". The apparatus in the publication has a basic structure of an apparatus for supplying a frozen confectionary including a pressure application member. The pressure application member applies pressure to the frozen confectionary contained in a container so as to dispense the frozen confectionary from an outlet port of the container, and the frozen confectionary is provided to an edible container such as cone. Below the outlet port of the container, a shutter means for receiving drippings of the frozen confectionary is provided so as to freely advance or retreat. The shutter means receive droppings of the frozen confectionary by moving towards the outlet port of the container. On the other hand, while the frozen confectionary is being dispensed, the shutter means is maintained at a distance from the outlet port for permitting the frozen confectionary to be supplied to the edible container.

The above-mentioned technology prevents the relevant part of the apparatus from being unclean by drippings of ice cream when the edible container for receiving ice cream is removed.

Japanese Patent Kokai Publication 2000-157180 (Patent Publication 3) relates to "Apparatus for thawing and dispensing frozen confectionary". Therein, dispensing containers for subdividing a solidified frozen confectionary in the containers, temperature of the frozen confectionary is increased to obtain a softened state, and then the frozen confectionary is dispensed. Accordingly, it is possible to dispense the frozen confectionary during a short period of time, because the dispensing was carried out after the softened state of the frozen confectionary was obtained by applying of heat thereto.

In addition to the above, another technology is disclosed wherein pressure is partially applied to the dispensing containers for subdividing the frozen confectionary contained therein after the above-mentioned softened state is obtained. According to the technology, it is possible to knead a product in the container, and hence to provide homogeneous and smooth soft ice cream.
Patent Publication 1 Japanese Kokai Publication 7(1995)-327608
Patent Publication 2 Japanese Kokai Publication 2000-232852
Patent Publication 3 Japanese Kokai Publication 2000-157180

### Disclosure of the Invention

### Objects to be achieved by the Invention

The above-mentioned patent publication 1, however, does not suggest anything about softening the ice cream or the like contained in the container (57) before dispensing operation. When the dispensing operation is carried out, it is necessary that the ice cream is soft enough to be dispensed. Accordingly, it is considered that the ice cream has been already softened to such a degree by using the hammer that the dispensing operation is made possible. It is also considered that an appropriate degree of the softness cannot be obtained depending on the product in the container. In addition to that, it would not be possible to eliminate the dripping problem that occurs while the apparatus is functioning. In particular, it is considered that the above structure does not make it possible to dispense a soft ice cream, which has a large oxygen content, in an appropriate degree of the softness.

The above-mentioned dripping problem before or after the ice cream dispensing operation has been solved by the shutter means which receives the drippings of the frozen confectionary, based on the technology of patent publication 2. The publication, however, only discloses an apparatus having a mechanism for dispensing ice cream from a container. Similar to the previously mentioned publication, it is difficult to instantly and appropriately dispense a frozen confectionary such as soft ice cream. Moreover, it would not be possible to dispense a variety of formulations, each with proper degree of the softness, when different formulations are dispensed from the apparatus.

Furthermore, the above-mentioned patent publication 3 discloses a technology wherein pressure is applied to dispensing containers which subdivides the frozen confectionary therein. In this technology, the temperature of the frozen confectionary is increased to obtain an ice cream in a softened state, and then the above-mentioned operation is carried out. Accordingly, it is inevitable that drippings or an excessively softened state of the ice cream is created when the outside temperature is high in the summer time, especially in the open air. Moreover, the softening operation/treatment is not changed depending on the kind of frozen confectionary. Therefore, a certain kind of frozen confectionary cannot be property dispensed, depending on the kinds of frozen confectionary.

There are many kinds of frozen confectionaries for soft ice creams. Namely, there are different solidified states when the formulations for the frozen confectionaries are different. For example, when the formulations having different milk fat component or non-fat milk solid component are solidified at the same temperature, the hardnesses of the formulations can be different from each other. Accordingly, when a softening operation of a frozen confectionary is carried out in the absence of heat application for obtaining the dispensable state of the same, it is not easy to produce a soft ice cream which is appropriately soft. In other words, it is not easy to obtain a soft ice cream without dripping, simultaneously with maintaining soft textures which soft ice creams should have.

The present invention has been accomplished with the above-mentioned object taken into consideration. It is an object of the invention to provide a system for softening and dispensing a frozen confectionary and a method therefor, wherein the frozen confectionary is softened with application of pressure thereto, and without applying heat thereto, whereby an appropriate degree of the softness of the soft ice cream is obtained regardless of the kind of frozen confectionary to be dispensed by a dispensing operation.

### Means for Achieving the Object

For achieving the object, a system for softening and dispensing a frozen confectionary according to claim 1 comprises a bag-shaped container having an outlet port, the bag-shaped container including the frozen confectionary; a frozen confectionary softening unit for softening the frozen confectionary in the bag-shaped container by application of pressure and in the absence of heat application thereto; a dispensing unit for dispensing the frozen confectionary from the outlet port, the frozen confectionary having been softened by the pressure application operation; a bag-shaped container transporting means for transporting the bag-shaped container to the frozen confectionary softening unit for a softening operation and to the dispensing unit to which the pressure is applied for a dispensing operation; a species recognition means for recognizing the species of the frozen confectionary provided in the bag-shaped container; and a control unit for controlling the frozen confectionary softening unit so as to function based on appropriate pre-stored conditions for the softening operation, depending on the recognized species of the frozen confectionary.

Accordingly, it is possible to carry out an appropriate softening operation, depending on the kind of frozen confectionary in the container, because the frozen confectionary is softened only by the application of pressure thereto. There are many kinds of raw materials for soft ice creams, such as vanilla, strawberry, pumpkin and carrot. The solidified states of these are different, for example, depending on the content of, e. g., milk fat component or non-fat milk solid component. Therefore, it is possible to obtain appropriate dispensing states when the softening operation is controlled, depending on the solidified states, by the frozen confectionary softening unit.

The kind/species of the frozen confectionary in the container is detected by a species recognition means. Bar codes for indicating information as to the frozen confectionary can be pasted to the bag·shaped container, and the species recognition means detects the information through the bar codes. Conditions to be applied for the softening operation without heat application, are pre-stored in a memory means provided in the control unit or the like. Usually, the solidified state, such as hardness, of each kind of frozen confectionary is recognized, and then corresponding settings are made. Then, corresponding instructions is stored, for example, for increasing the period or the number of softening operation for the frozen confectionary which is hard.

The hardness of the frozen confectionary in the container can be determined by detecting the movement of the frozen confectionary softening unit, more precisely by detecting the period of reciprocating movement of the crushing means which will be described later. In this way, it is possible to confirm the solidified state of each formulation in advance, and to store appropriate corresponding conditions for the softening operation.

In the system for softening and dispensing a frozen confectionary according to claim 2, the frozen confectionary softening unit comprises a crushing means which moves reciprocatingly, the reciprocating movement applying an impact to the frozen confectionary in the bag-shaped container. Pressure is applied to the frozen confectionary in the bag-shaped container by a reciprocating movement of the crushing means, whereby the frozen confectionary is gradually softened.

In the system for softening and dispensing a frozen confectionary according to claim 3, the control unit controls the frozen confectionary softening unit by changing the number of impacts applied to the frozen confectionary by the crushing means, and by adjusting a feeding stroke of the crushing means. When the number of impacts applied by the crushing means is increased, the degree of the softness increases. Likewise, when the feeding pitch of the crushing means is increased, the degree of the softness increases.

In the system for softening and dispensing a frozen confectionary according to claim 4, the control unit controls the frozen confectionary softening unit by adjusting the transporting movement of the bag-shaped container transporting means with respect to the bag-shaped container. Namely, when the transporting operation of the bag-shaped container takes long time, the frozen confectionary is softened well. Furthermore, it is possible to transport the bag-shaped container, which has been subjected to the softening operation, in a reversed direction, and to subject the already treated part of the container to a softening operation again.

The system for softening and dispensing a frozen confectionary according to claim 5, further comprises a temperature sensor for detecting a temperature of the frozen confectionary during the softening operation by the frozen confectionary softening unit, the control unit additionally controlling the softening operation of the frozen confectionary softening unit, based on the temperature detected.

Accordingly, it is possible that the control unit additionally controls the softening operation of the frozen confectionary softening unit after the detection of the temperature, in addition to the softening operation under the pre-stored conditions depending on the kind of frozen confectionary. The frozen confectionaries are solidified and preserved in many places. Therefore, the temperature of the frozen confectionaries can be varied. For example, when the ambient temperature is high, the softening readily progresses. In such case, the period or the degree of the softening operation is decreased.

A system for softening and dispensing a frozen confectionary according to claim 6 comprises a bag-shaped container having an outlet port, the bag-shaped container including therein the frozen confectionary; a frozen confectionary softening unit for softening the frozen confectionary in the bag-shaped container by application of pressure and in the absence of heat application thereto; a dispensing unit for dispensing the frozen confectionary from the outlet port, the frozen confectionary having been softened by the pressure application operation; a bag-shaped container transporting means for transporting the bag-shaped container to the frozen confectionary softening unit for a softening operation at and to the dispensing unit for a dispensing operation; a softened degree detection unit for detecting the degree to which the frozen confectionary has been softened, based on the operation of the frozen confectionary softening unit; and a control unit for controlling the softening operation by the frozen confectionary softening unit, in the absence of heat application, depending on the degree of softness of the frozen confectionary detected by the softened degree detection unit.

The above structure is not for carrying out the operation of the frozen confectionary softening unit under a pre-stored control condition, but for carrying out the operation with the control condition being chosen as the softening operation progresses. The softened degree detection unit detects the degree of the softness of the frozen confectionary through the operation/movement of the frozen confectionary softening unit.

The system for softening and dispensing a frozen confectionary according to claim 7, the frozen confectionary softening unit comprises a crushing means which moves reciprocatingly, the reciprocating movement applying an impact to the frozen confectionary in the bag-shaped container.

In the system for softening and dispensing a frozen confectionary according to claim 8, the softened degree detection unit comprises an operation rate detection means which detects the rate of the reciprocating movement of the crushing means, the softened degree detection unit determining whether an appropriate softening process is progressing when a time required for the crushing operation during the reciprocating movement of the crushing means is longer than a predetermined time.

The crushing means imparts an impact (applies pressure) to the frozen confectionary to soften the same. The more the degree of the softness increases, the more the pressing quantity by the crushing means (e.g. feeding pitch of the crushing means) against the frozen confectionary increases. Therefore, the period of the crushing operation during the reciprocating movement increases when the softened degree is high. Accordingly, it is possible to detect the degree of the softness of the frozen confectionary from the time of the reciprocating movement of the crushing means.

A method for softening and dispensing a frozen confectionary according to claim 9 comprises a frozen confectionary softening step for softening the frozen confectionary contained in a bag-shaped container having an outlet port by application of impact to the bag-shaped container and in the absence of heat application to the frozen confectionary, the softening step occurring at the same time with the bag being transported; a dispensing step for dispensing the frozen confectionary from the outlet port of the bag-shaped container, the dispensing step following the frozen confectionary softening step, the frozen confectionary having been softened by the pressure application operation to the bag-shaped container; and a species recognition step for recognizing the species of the frozen confectionary which is provided in the bag-shaped container, the species recognition step being carried out prior to the frozen confectionary softening step, the operation in the frozen confectionary softening step being controlled based on the conditions for the softening operation, depending on the recognized species of the frozen confectionary.

According to the above method, a proper softening operation is performed depending on the kind of frozen confectionary when the softening operation is applied to the frozen confectionary only by applying pressure thereto. The kind/species of the frozen confectionary in the container is detected in the species recognition step. Bar codes for indicating information as to the kind of the frozen confectionary can be pasted to the bag-shaped container, and the information is detected through the bar codes. Conditions to be applied for the softening operation without heat application, is pre-stored in a memory means provided in the control unit or the like. Usually, the solidified state, such as hardness, of each kind of frozen confectionary is first recognized. Then, corresponding instructions is stored, for example, for increasing the period or the number of softening operation for the frozen confectionary which is hard.

A method for softening and dispensing a frozen confectionary according to Claim 10 comprises a frozen confectionary softening step for softening the frozen confectionary contained in a bag-shaped container having an outlet port, by application of impact and in the absence of heat application to the frozen confectionary, the softening step occurring at the same time with the bag being transported; a dispensing step for dispensing the frozen confectionary from the outlet port of the bag-shaped container, the dispensing step following the frozen confectionary softening step, the frozen confectionary having been softened by the application of pressure to the bag-shaped container; and a softened degree detection step for detecting the degree to which the frozen confectionary has been softened during the frozen confectionary softening step, the operation in the frozen confectionary softening step being controlled depending on the degree of softness of the frozen confectionary detected in the softened degree detection step.

The above method is not for carrying out the operation of the frozen confectionary softening unit under a pre-stored control condition, but for carrying out the operation with the control condition being chosen as the softening operation progresses. The softened degree detection unit detects the degree of the softness of the frozen confectionary through the operation/movement of the frozen confectionary softening unit.

### Effect of the Invention

According to the present invention, the frozen confectionary is softened with application of pressure and in the absence of heat application thereto, and then the frozen confectionary is dispensed by the dispensing operation. Thus, it is possible to dispense the frozen confectionary always in an appropriately soft state, simultaneously in a non-dripping state, regardless of the kind of frozen confectionary, Accordingly, it is possible to achieve the object of the invention, that is, to dispense a frozen confectionary in an excellent state from a handy frozen confectionary dispenser, which can be placed in many environments with temperature variation. The dispenser is designed to be widely used.

### Best Mode for Carrying out the Invention

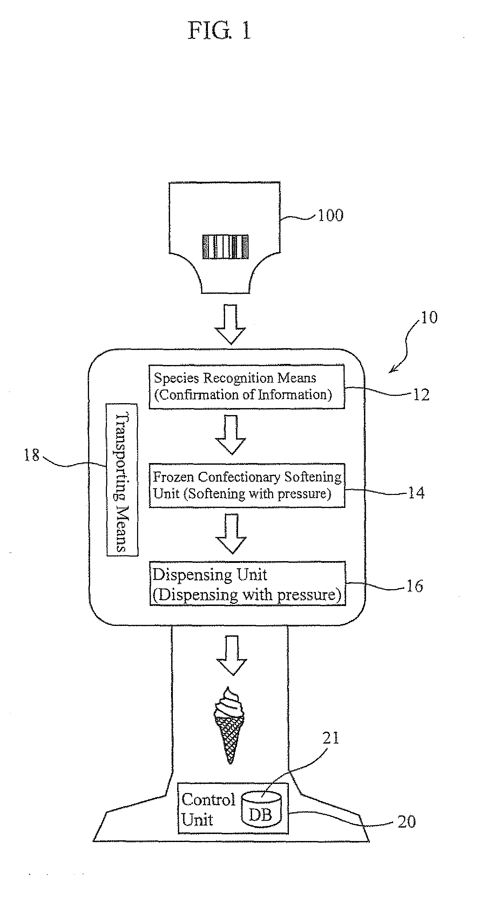

The embodiment of the present invention will now be explained with referring to the drawings. Fig. 1 shows a diagram for explaining a general idea of the structure for a frozen confectionary softening and dispensing apparatus 10 (hereinafter, referred to as "unit 10"), which is used for an exemplary system of the present invention. In the following embodiment, explanation is made by referring to soft ice cream as a frozen confectionary.

Soft ice cream, which has been prepared in accordance with a predetermined manufacture process, is stored in a bag-shaped container 100 with an outlet port. The structure of the bag-shaped container 100 is described, for example, in an application earlier filed by the applicant of the invention. The bag-shaped container in the earlier application is described to have a structure obtained by being folded into a predetermined shape. The structure with the folded shape is unfolded when the product is pressed out of the container. Accordingly, the product is appropriately dispensed from the outlet port of the container (Application No.: Japanese Patent Application 2002-239896).

A species recognition means 12, which recognizes the species/kind of a frozen confectionary provided in the bag-shaped container, is provided in the frozen confectionary softening and dispensing apparatus 10. The species of the frozen confectionary in the container is recognized. The recognition operation is carried out, for example, by applying a bar code label as shown in the figure to the bag-shaped container 100 in advance, and reading the label by a bar code reader provided in the frozen confectionary softening and dispensing apparatus 10. Information to be recognized by the bar code is the formulation of soft ice cream, manufacturer, content of ingredients, content of air, hardness when the formulation is solidified at an predetermined temperature.

Beside the species recognition means 12, a frozen confectionary softening unit 14 is provided. The frozen confectionary softening unit 14 functions to soften the frozen confectionary contained in the bag-shaped container 100 with application of pressure and in the absence of heat application. In other words, a softening operation is performed so as to make the frozen confectionary to be soft enough for performing the pressure-applied dispensing operation by a dispensing unit 16.

The dispensing unit 16 performs an action for pressing/squeezing out the solidified frozen confectionary from the outlet port of the bag-shaped container 100. Namely, the frozen confectionary is dispensed from the bag-shaped container 100 by applying pressure thereto.

Moreover, a transporting mechanism 18 for transporting the bag-shaped container 100 is further incorporated in the apparatus 10. The transportation is carried out from a step where the bag-shaped container 100 is charged with the frozen confectionary, to a dispensing step where the frozen confectionary is dispensed or to a discharging step after the dispensing step.

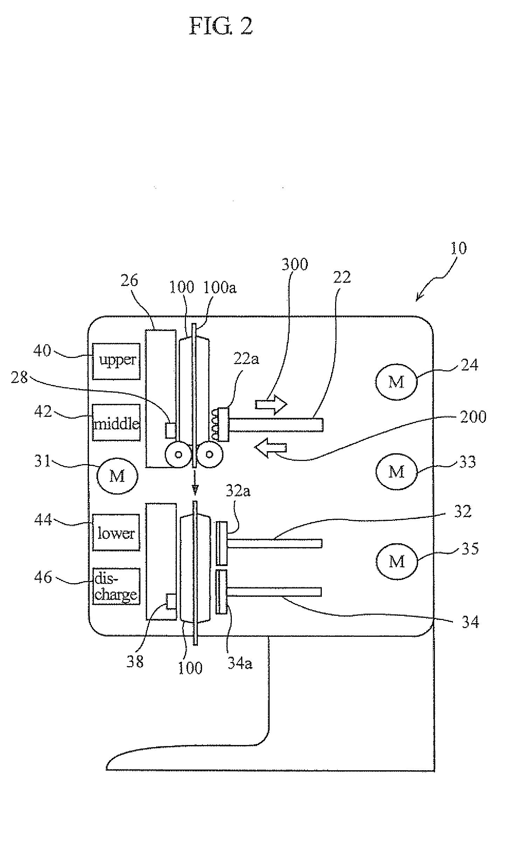

Fig. 2 is a diagram for explaining essential parts of the functional mechanism of the apparatus 10. In the figure, specific examples of the structures are shown with respect to the frozen confectionary softening unit 14, dispensing unit 16 and transporting mechanism 18. As shown in the figure, the frozen confectionary softening unit 14 includes a crushing member 22 having a pressure application blade 22a at an end thereof. The pressure application blade 22a has a plate shape having an uneven outer surface for effectively softening the frozen confectionary.

The crushing member 22 is driven by a crush motor 24, and makes a reciprocating movement in the directions shown by white arrows 200 and 300. The reciprocating movement of the crushing member 22 applies a pressure to the frozen confectionary in the bag-shaped container 100. More particularly, in the present embodiment, the pressure application blade is brought into contact with the frozen confectionary for applying the pressure thereto during the reciprocating movement of the crushing member 22. For instance, a supporting plate 26 made of a resin is provided so as to oppose to the crushing member 22. The bag-shaped container 100 is held to be interposed between the supporting plate 26 and the crushing member 22. In this state, the pressure is applied to the container.

During the softening operation by the crushing member 22, the bag-shaped container 100 is transferred by the transporting mechanism 18 with an edge 100a being caught by the transporting mechanism 18, i.e., a roller pair 30. The roller pair(s) 30 which is/are placed at either one of right or left side, or at both sides, is/are driven by a drive motor 31. A temperature sensor 28 is provided in the supporting plate 26, for detecting the temperature of the frozen confectionary during the softening operation.

The dispensing unit 16 includes an upper pressure application member 32 and a lower pressure application member 34 having pressure application blades 32a and 34a on the ends, respectively. The upper and lower pressure application members press an upper part or and a lower part in the figure, of the bag-shaped container 100, respectively. The upper pressure application member 32 and the lower pressure application member 34 are driven respectively by drive motors 33 and 35. Moreover, a supporting plate 36, which made, for example, of a resin is provided at a position opposing to the pressure application blades 32a and 34a. The supporting plate 36 receives a pressure from the pressure application blades 32a and 34a with maintaining the bag-shaped container 100 interposed therebetween.

A control unit 20 shown at a lower part of the apparatus 10 is provided for performing two-way transmission to and from the above-mentioned structural components, and for transmitting a control signal to drive units. Database 21 stored in the control unit 20 includes data which is used for determining whether or not products are proper, that will be described later; data as to formulations; conditions for softening operations depending on the formulation; and information for as to a the frozen confectionary in an appropriately soft state depending on the kind of frozen confectionary,

First, the upper pressure application member 32 moves for dispensing the frozen confectionary by application of pressure thereto. By the movement of the upper pressure application member 32, the frozen confectionary in the bag-shaped container 100 is push down in a downward direction. In such state, the lower pressure application member 34 apply a pressure to the bag-shaped container 100 based on the transporting movement of the pressure application member 34. As a result, the frozen confectionary contained in the bag-shaped container 100 is dispensed from the outlet port provided at a lower part of the bag-shaped container 100. The frozen confectionary at the stage of the dispensing operation has been appropriately softened by the frozen confectionary softening unit 14, and is smoothly dispensed without drippings. Thus, soft ice cream having smooth feelings is obtained. In the figures, reference numerals 40, 42, 44 and 46 are position sensors for detecting positions of the bag-shaped container 100 while moving.

### Example 1

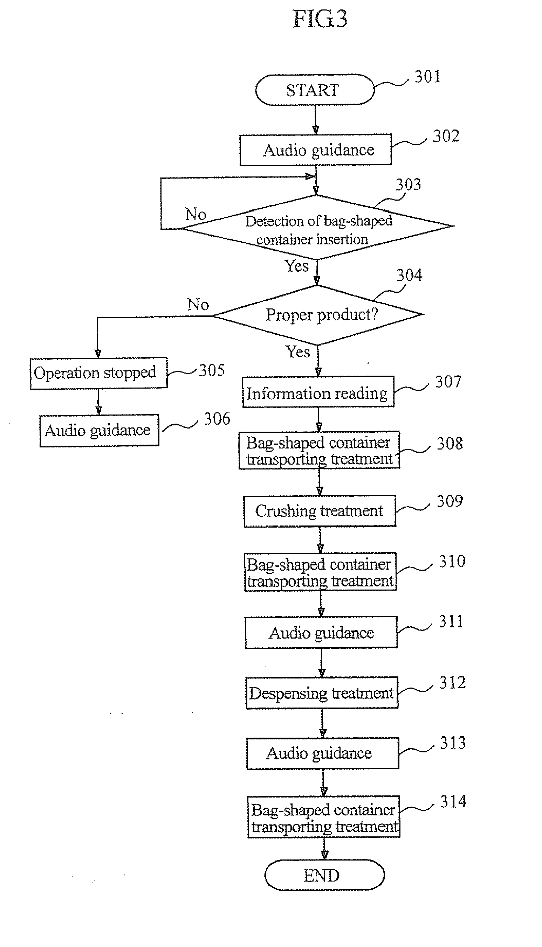

An exemplary function/operation of a system of the present invention will be explained, wherein the apparatus 10 described above is used. Fig. 3 is a flowchart for showing the operation of the system according to the invention. Each step for showing the operational procedure is simply described as "S". Firstly, the apparatus 10 is switched on (S301). Here, an audio guidance (such as "please insert a pack") is made (S303).

Secondly, a loading operation is carried out by a user at S303, wherein the apparatus 10 is charged with the bag-shaped container 100. At next step S304, it is determined whether or not the charged bag-shaped container 100 is proper, i.e., whether or not the bag-shaped container 100 contains a frozen confectionary which has been prepared through a proper manufacture process. The judgment is made by the above-mentioned species recognition means 12 (see Fig. 1), for instance, by reading the bar code seal applied on the bag-shaped container 100. The control unit 20 receives the read signal from the species recognition means 12, and judgment is made if proper product is used. In other words, judgment is made if a proper data is applied to the container, or if the product has been prepared by a manufacturing step under a satisfactory controlled condition.

When it is judged that an improper product is charged (No Case), treatment is suspended at S305. In this case, an audio guidance for suspending the operation is made at S306. On the other hand, when it is judged that a proper product is charged (Yes Case), information reading operation is carried out at S307. The reading operation is performed also by the species recognition means 12, and the read signal is received by the control unit 20. The signal, for example, relates to information as to species of a soft ice cream contained in the bag-shaped container 100. After the control unit 20 receives the read information, appropriate crushing condition is selected from data stored in the database 21, depending on the species of the soft ice cream.

Although the solidified states are different depending on the kind of soft ice cream contained in the bag-shaped container 100, an appropriate softening operation, which corresponds to the solidified state of the soft ice cream, can be carried out based on the above operation. In the present invention, the frozen confectionary is softened only with applying pressure and in the absence of heat application thereto. It is extremely important to take into consideration that the apparatus is placed under variety of circumstances (particularly at places with temperature variation), and to control the hardness of many kinds of soft ice cream so as to be dispensed in an appropriately soft state without excessive melting, when the frozen confectionary is softened with application of pressure and in the absence of heat application thereto.

Frozen confectionaries for soft ice creams contain different ingredients. For example, vanilla soft ice cream contains 9.0% of milk fat component and 8.0% of non-fat milk solid component; pumpkin soft ice cream contains 3.6% of milk fat component and 6.9% of non-fat milk solid component; strawberry soft ice cream contains 7.5% of milk fat component and 8.5% of non-fat milk solid component of; carrot soft ice cream contains 7.0% of milk fat component and 8.0% of non-fat milk solid component; and yogurt soft ice cream contains 3.6% of milk fat component and 6.9% of non-fat milk solid component. Depending on the ingredients, the frozen confectionaries assume solid states having different hardnesses. An appropriate softening operational condition, which corresponds to the solid state, is chosen from the pre-stored conditions.

Following the above step, the hag-shaped container 100 is subjected to a transporting operation at S308, for transferring the container to a crushing treatment (S309) as a softening operation under the above-mentioned condition.

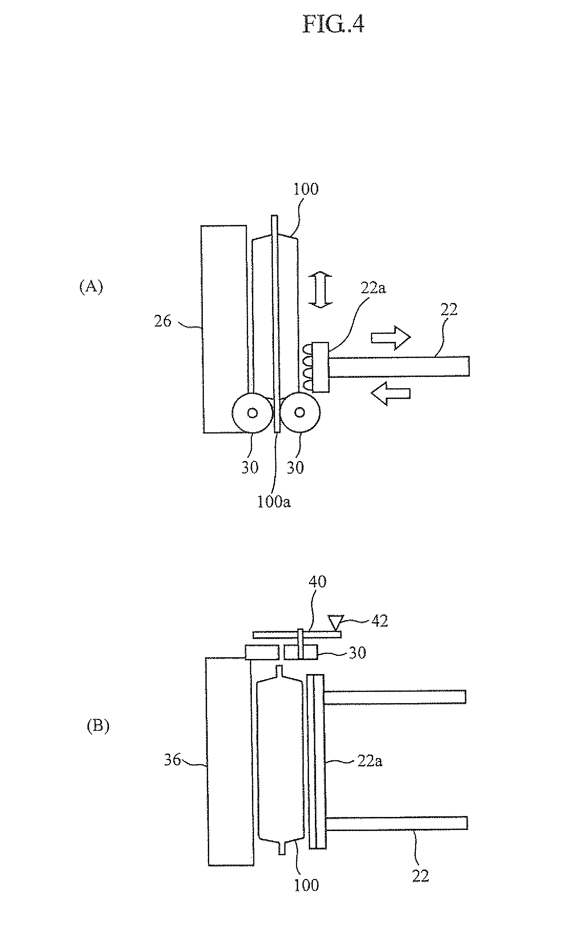

Fig. 4 shows a structure for controlling the transporting quantity of the bag-shaped container transported by the roller pair 30, i.e., by the transporting mechanism 18. The transporting mechanism 18 involves in the operation in S308. Figs. 4(A) and 4(B) are respectively a side view and a plan view of the crushing member 22 as the frozen confectionary softening unit 14 and the transporting mechanism 18. As shown in the figure, a disk with slits 40 is provided on one roller constituting the roller pair 30 so as to be coaxial with the roller (please refer to Fig. 4(B)). The disk 40 has slits which spaced apart from each other having a same distance therebetween. The disk with slits 40 rotates synchronously with the rotation of the roller. A rotation detecting sensor 42 is provided so as to oppose to the disk with slits 40, and detects the slits. Hence, the rotation detection sensor 42 detects the transporting quantity of the bag-shaped container 100.

Subsequently, the bag-shaped container, which has been transported to the softening unit, is subjected to a crushing treatment at S309, under the crushing condition selected at S308. For example, impact is applied to the bag-shaped container 100 by the crushing member 22, under a predetermined condition as to the number of impacts in the impact application operation. For example, the number of crushing movements is controlled to be large with respect to a frozen confectionary having a large hardness. It is also possible to carry out the above operation in cooperation with the transporting mechanism 18. More precisely, it is possible to control the crushing operation so as to repeat the crushing movement to a certain part of the frozen confectionary, or so as to make the crushing movement by returning to a part of the frozen confectionary.

After completing the softening operation, a transporting operation is carried out at S310. Here, the bag-shaped container 100 is transported to a position for the following pressure-applied dispensing operation. Then, an audio guidance such as "dispensing will start" will be made at S311. In the following S313, the dispensing operation is carried out. Namely, a softened frozen confectionary is dispensed from the outlet port of the bag-shaped container 100, by the dispensing unit 16. The soft ice cream is dispensed in a properly soft state which the soft ice cream should have, without unnecessary drippings. This is fulfilled because the softening operation is carried out under an appropriate condition. In addition to the above, the softening operation is appropriately controlled depending on the kind of ingredients. Therefore, it is possible to attain good and soft textures of the soft ice cream, regardless of the kind of soft ice cream.

At S314, an audio guidance such as "Dispensing is completed" is made. Then, a transporting treatment of the bag-shaped container 100 at 315, that is, a discharging operation thereof is carried out. In this way, the frozen confectionary softening and dispensing operation is completed. In the above-mentioned steps, the positions of the bag-shaped container 100 are detected by sensors 40, 42, 44 and 46 provided in the apparatus 10. Then, the control unit 20 controls the operation of the transporting mechanism 18 based on the detection signals of the sensors.

### Example 2

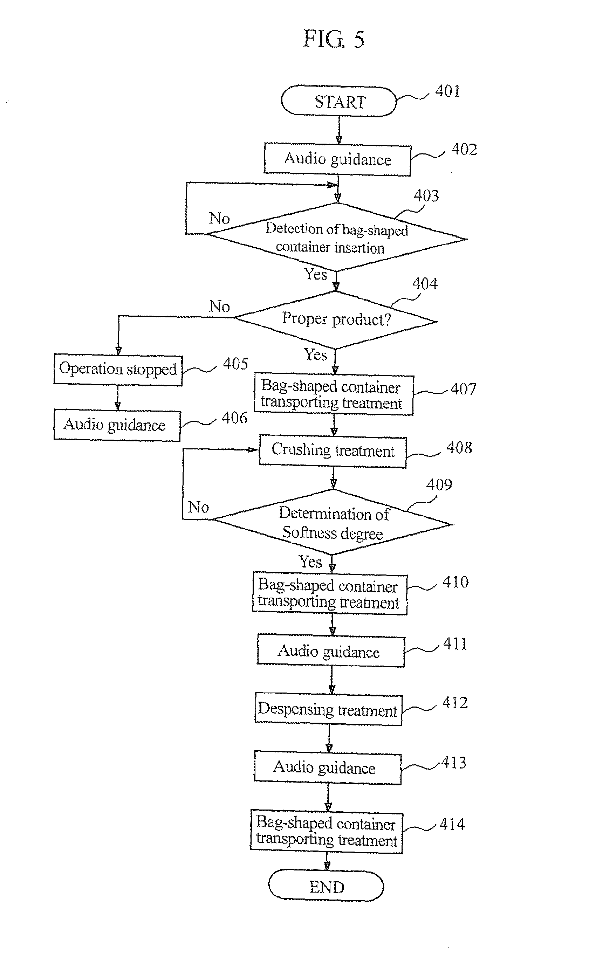

Fig. 5 is a flowchart for showing a softening and dispensing operation in Example 2. Here, the same explanation as in the process in Example 1 is omitted. Namely, S401 to S406 are common steps between the examples. When it is judged that the bag-shaped container 100 is a proper product (Yes case), the bag-shaped container 100 is subjected to the transporting treatment in S407, and the crushing operation is carried out in S408. The structures of members such as the transporting mechanism 18 and the crushing member 22 of the frozen confectionary softening unit 16 are the same as those explained as to the operation relating to Fig. 3.

It is important in Example 2 that the frozen confectionary is directly transported to the crushing treatment in S408, without passing through the frozen confectionary species recognition and the reading out of the crushing operational condition (S307) carried out in Fig. 3. The degree of the softness of the frozen confectionary is detected and judged in the course of the crushing treatment (S409).

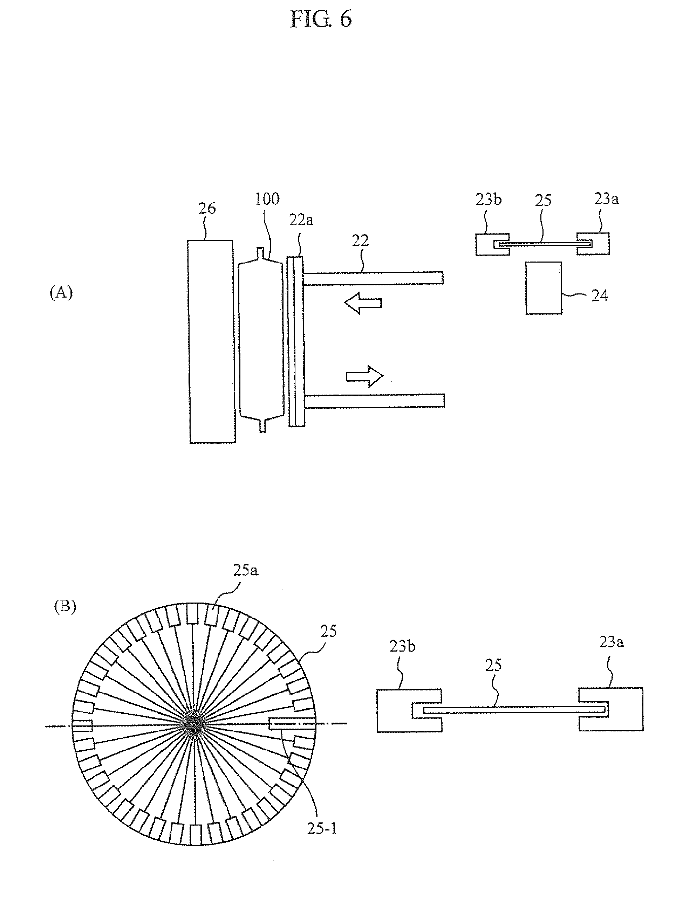

Fig. 6 is a diagram for showing a structure for determining whether or not an appropriate softness has been obtained by operation of the crushing member 22 which constitutes a frozen confectionary softening unit 14. The structure is used not only for determining the degree of the softness of the frozen confectionary, but also for controlling the impact application operation with respect to the frozen confectionary in the bag-shaped container 100.

Fig. 6(A) is a plan view of a crushing member 22 which is a frozen confectionary softening unit 14. A crush motor 24 allows the crushing member 22 to move reciprocatingly. A disk with slits 25, which is used as a shield plate, is provided on a rotational shaft of the crush motor 24. Furthermore, a standard point sensor 23a and a stroke sensor 23b are provided, for detecting a feeding pitch of the disk with slits.

Fig. 6(B) shows a structure of the disk with slits 25. The disk with slits 25 has 36 slits 25a on the periphery thereof, which are arranged at regular intervals. A slit 25a-1, which is longest among the slits 25a, is determined as a standard point, and is detected by the standard point sensor 23a. Accordingly, the rate of the reciprocating movement of the crushing member 22 and the stroke of the reciprocating movement are detected by the cooperation of the standard point sensor 23a and the stroke sensor 23b. Here, the stroke sensor 23b detects the feeding pitch of the disk while the disk with slits 25 rotates.

The control unit 20 controls the drive motor 24 based on the above information, in order to regulate the impact application movement. In other words, the impact application movement of the crushing member 22 is controlled by changing the number, rate and strokes of the movement of the crushing member 22. Consequently, the crushing member 22 performs an appropriate softening operation.

The operation for determining the degree of the softness can be carried out at S409, and the pressure application state with respect to the frozen confectionary is detected by the standard point sensor 23a and a stroke sensor 23b while the crushing member 22 is moving reciprocatingly. By detecting the rate of the pressure application movement/crushing movement, the softened degree is determined. If the degree of the softness increases, the moving rate decreases. Therefore, it is possible to judge that an appropriate softening operation has been made when the moving ration is lower than a predetermined rate.

When it is not possible to judge that an appropriate softening has been made at S409 (No case), the crushing operation (S408) is continued. In this case, an operation for determining the softness degree is carried out at S409 again. The softening operation is stopped when it is determined that the degree of the softness is proper (Yes case). At S410, the bag-shaped container 100 is transported to the following step. The following steps S411 to S414 are the same as the steps S312 to S315 explained relating to Fig. 3, so that the explanation is omitted.

Based on the above-mentioned embodiment, it is possible to detect the degree of the softness of the frozen confectionary through the crushing operation, even if conditions for the softening operations, which are appropriate for many kinds of soft ice cream, have not been pre-stored. Therefore, it is possible to appropriately soften varieties of soft ice creams, and to appropriately dispense these, regardless of the kind of soft ice creams.

### Brief Description of the Drawings

Fig. 1 is a diagram for explaining a general idea of a structure of a frozen confectionary softening and dispensing apparatus as an according to the present invention.
Fig. 2 is a diagram for explaining a structural embodiment of mechanisms in the apparatus shown in Fig. 1.
Fig. 3 is a flowchart for showing the operation described in Example 1.
Fig. 4 is a diagram for explaining a mechanism for controlling a transporting mechanism as shown in Example 1, wherein (A) is a side view, and (B) is a plan view.
Fig. 5 is a flowchart for showing an operation described in Example 2.
Fig. 6 is a diagram for explaining a structure for controlling the movement of crushing member as an embodiment, wherein (A) is an entire view, and (B) is a diagram for explaining details.

### Explanation of Symbols

- 10: Frozen confectionary softening and dispensing apparatus
- 12: Species recognition means
- 14: Frozen confectionary softening unit
- 16: Dispensing unit
- 18: Species recognition means
- 20: Control unit
- 22: Crushing member
- 25: Disk with slits
- 32: Upper pressure application member
- 34: Lower pressure application member
- 100: Bag-shaped container

## Claims

1. A system for softening and dispensing a frozen confectionary comprising:
a bag-shaped container having an outlet port, the bag-shaped container including the frozen confectionary;
a frozen confectionary softening unit for softening the frozen confectionary in the bag-shaped container by application of pressure and in the absence of heat application thereto;
a dispensing unit for dispensing the frozen confectionary from the outlet port, the frozen confectionary having been softened by the pressure application operation;
a bag-shaped container transporting means for transporting the bag-shaped container to the frozen confectionary softening unit for a softening operation and to the dispensing unit to which the pressure is applied for a dispensing operation;
a species recognition means for recognizing the species of the frozen confectionary provided in the bag-shaped container; and
a control unit for controlling the frozen confectionary softening unit so as to function based on appropriate pre-stored conditions for the softening operation, depending on the recognized species of the frozen confectionary.

2. The system for softening and dispensing a frozen confectionary as claimed in claim 1, wherein the frozen confectionary softening unit comprises a crushing means which moves reciprocatingly, the reciprocating movement applying an impact to the frozen confectionary in the bag-shaped container.

3. The system for softening and dispensing a frozen confectionary as claimed in claim 2, wherein the control unit controls the frozen confectionary softening unit by changing the number of impacts applied to the frozen confectionary by the crushing means, and by adjusting a feeding stroke of the crushing means.

4. The system for softening and dispensing a frozen confectionary as claimed in any of claims 1 to 3, wherein the control unit controls the frozen confectionary softening unit by adjusting the transporting movement of the bag-shaped container transporting means with respect to the bag-shaped container.

5. The system for softening and dispensing a frozen confectionary as claimed in any of claims 1 to 4, further comprising a temperature sensor for detecting a temperature of the frozen confectionary during the softening operation by the frozen confectionary softening unit, the control unit additionally controlling the softening operation of the frozen confectionary softening unit, based on the temperature detected.

6. A system for softening and dispensing a frozen confectionary comprising:
a bag-shaped container having an outlet port, the bag-shaped container including therein the frozen confectionary;
a frozen confectionary softening unit for softening the frozen confectionary in the bag-shaped container by application of pressure and in the absence of heat application thereto;
a dispensing unit for dispensing the frozen confectionary from the outlet port, the frozen confectionary having been softened by the pressure application operation;
a bag-shaped container transporting means for transporting the bag-shaped container to the frozen confectionary softening unit for a softening operation at and to the dispensing unit for a dispensing operation;
a softened degree detection unit for detecting the degree to which the frozen confectionary has been softened, based on the operation of the frozen confectionary softening unit; and
a control unit for controlling the softening operation by the frozen confectionary softening unit, in the absence of heat application, depending on the degree of softness of the frozen confectionary detected by the softened degree detection unit.

7. The system for softening and dispensing a frozen confectionary as claimed in claim 6, wherein the frozen confectionary softening unit comprises a crushing means which moves reciprocatingly, the reciprocating movement applying an impact to the frozen confectionary in the bag-shaped container.

8. The system for softening and dispensing a frozen confectionary as claimed in claim 7, wherein the softened degree detection unit comprises an operation rate detection means which detects the rate of the reciprocating movement of the crushing means, the softened degree detection unit determining whether an appropriate softening process is progressing when a time required for the crushing operation during the reciprocating movement of the crushing means is longer than a predetermined time.

9. A method for softening and dispensing a frozen confectionary comprising:
a frozen confectionary softening step for softening the frozen confectionary contained in a bag-shaped container having an outlet port by application of impact to the bag-shaped container and in the absence of heat application to the frozen confectionary, the softening step occurring at the same time with the bag being transported;
a dispensing step for dispensing the frozen confectionary from the outlet port of the bag-shaped container, the dispensing step following the frozen confectionary softening step, the frozen confectionary having been softened by the pressure application operation to the bag-shaped container; and
a species recognition step for recognizing the species of the frozen confectionary which is provided in the bag-shaped container, the species recognition step being carried out prior to the frozen confectionary softening step, the operation in the frozen confectionary softening step being controlled based on the conditions for the softening operation, depending on the recognized species of the frozen confectionary.

10. A method for softening and dispensing a frozen confectionary comprising:
a frozen confectionary softening step for softening the frozen confectionary contained in a bag-shaped container having an outlet port, by application of impact and in the absence of heat application to the frozen confectionary, the softening step occurring at the same time with the bag being transported;
a dispensing step for dispensing the frozen confectionary from the outlet port of the bag-shaped container, the dispensing step following the frozen confectionary softening step, the frozen confectionary having been softened by the application of pressure to the bag-shaped container; and
a softened degree detection step for detecting the degree to which the frozen confectionary has been softened during the frozen confectionary softening step, the operation in the frozen confectionary softening step being controlled depending on the degree of softness of the frozen confectionary detected in the softened degree detection step.
